# EUROPEAN PATENT SPECIFICATION

(11) **EP 4 712 352 B1**
(45) Date of publication and mention of the grant of the patent: **02.09.2026**
(21) Application number: 25195308.9
(22) Date of filing: 12.08.2025
(51) Int. Cl.: H04B 1/00, H04B 1/18

(54) **RADIO FREQUENCY FRONT-END CIRCUIT AND ELECTRONIC DEVICE**
HOCHFREQUENZ-FRONTEND-SCHALTUNG UND ELEKTRONISCHE VORRICHTUNG
CIRCUIT FRONTAL RADIOFRÉQUENCE ET DISPOSITIF ÉLECTRONIQUE

(30) Priority: 12.09.2024 CN 202411277024
(43) Date of publication of application: 18.03.2026
(73) Proprietor: Getac Technology Corporation, New Taipei City 221009 (TW)
(72) Inventor: YANG, Shang-Yi, 11568 Taipei City (TW)
(74) Representative: Viering, Jentschura & Partner mbB Patent- und Rechtsanwälte

(56) References cited:
- EP-B1- 2 777 166
- US-B2- 10 673 484

## Description

### BACKGROUND

### Field of Invention

The present disclosure relates to a radio frequency front-end circuit and an electronic device. More particularly, the present disclosure relates to a radio frequency front-end circuit and an electronic device capable of reducing a number of antennas.

### Description of Related Art

Nowadays, electronic devices need to be equipped with an increasing number of antennas to meet various wireless transmission requirements, such as reception of wireless wide area network communication, wireless local area network communication, and global navigation system. However, electronic devices have always been designed to be light, thin, short, and small. In consideration of usage scenarios requiring support for multiple antennas and applications at the same time, the current design methods for multi-antenna communication systems cannot optimize the limited space of electronic devices (such as handheld devices or wearable devices). Therefore, how to resolve the above problems is a pertinent subject in this field. The documents US10673484B2 and EP2777166B1 show related prior art.

### SUMMARY

A radio frequency front-end circuit is provided. The radio frequency front-end circuit includes a first diplexer, an extractor, and a second diplexer. The first diplexer is coupled to an antenna for receiving a radio frequency signal, and the first diplexer is configured to separate the radio frequency signal into a first signal within low, mid and high bands of a wireless wide area network and a second signal within an ultra-high band of the wireless wide area network. The extractor is coupled to the first diplexer. The extractor includes two band pass filters and a band rejection filter. The two band pass filters are configured to extract two global navigation system signals within two global navigation system bands from the first signal. The band rejection filter is configured to allow a third signal within the midand high bands of the wireless wide area network in the first signal to pass. The second diplexer is coupled to the first diplexer and the extractor, and the second diplexer is configured to combine the second signal and the third signal into a wireless wide area network signal.

In one or more embodiments, the antenna supports the two global navigation system bands and a wireless wide area network band.

In one or more embodiments, the antenna is a wireless wide area network auxiliary antenna.

In one or more embodiments, the extractor is a dual extractor.

In one or more embodiments, the band rejection filter is a dual-band rejection filter.

In one or more embodiments, the band rejection filter is coupled between the first diplexer and the second diplexer.

In one or more embodiments, the band rejection filter is configured to attenuate the two global navigation system signals within the two global navigation system bands contained in the first signal, and allow the third signal within the mid and high bands of the wireless wide area network in the first signal to pass.

In one or more embodiments, the two global navigation system bands are a global navigation system L1 band and a global navigation system L5 band.

In one or more embodiments, the low, mid and high bands of the wireless wide area network comprises the two global navigation system bands and the mid and high bands of the wireless wide area network.

In one or more embodiments, the two band pass filters include a first band pass filter and a second band pass filter. The first band pass filter is configured to allow a first global navigation system signal of the two global navigation system signals to pass. The second band pass filter is configured to allow a second global navigation system signal of the two global navigation system signals to pass.

In one or more embodiments, the radio frequency front-end circuit further includes a first low noise amplifier and a second low noise amplifier. The first low noise amplifier is coupled to an output terminal of the first band pass filter, and the first low noise amplifier is configured to amplify the first global navigation system signal to provide a first amplified signal to a first connection port of a global navigation system module. The second low noise amplifier is coupled to an output terminal of the second band pass filter, the second low noise amplifier is configured to amplify the second global navigation system signal to provide a second amplified signal to a second connection port of the global navigation system module.

In one or more embodiments, the radio frequency front-end circuit further includes a triplexer coupled to an external antenna that supports the two global navigation system bands. The radio frequency front-end circuit further includes a first single pole double throw switch. A common contact of the first single pole double throw switch is coupled to the first connection port of the global navigation system module. A first contact of the first single pole double throw switch is coupled to the triplexer. A second contact of the first single pole double throw switch is coupled to an output terminal of the first low noise amplifier.

In one or more embodiments, the radio frequency front-end circuit further includes a triplexer and a second single pole double throw switch. The triplexer coupled to an external antenna that supports the two global navigation system bands. A common contact of the second single pole double throw switch is coupled to the second connection port of the global navigation system module. A first contact of the second single pole double throw switch is coupled to the triplexer. A second contact of the second single pole double throw switch is coupled to an output terminal of the second low noise amplifier.

The present disclosure provides an electronic device. The electronic device includes an antenna and a radio frequency front-end circuit. The antenna is for receiving a radio frequency signal. The radio frequency front-end circuit includes a first diplexer, an extractor, and a second diplexer. The first diplexer is coupled to the antenna, and the first diplexer is configured to separate the radio frequency signal into a first signal within low, mid and high bands of a wireless wide area network and a second signal within an ultra-high band of the wireless wide area network. The extractor is coupled to the first diplexer. The extractor includes two band pass filters and a band rejection filter. The two band pass filters are configured to extract two global navigation system signals within two global navigation system bands from the first signal. The band rejection filter is configured to allow a third signal within mid and high bands of the wireless wide area network in the first signal to pass. The second diplexer is coupled to the first diplexer and the extractor, and the second diplexer is configured to combine the second signal and the third signal into a wireless wide area network signal.

In one or more embodiments, the antenna supports the two global navigation system bands and a wireless wide area network band.

In summary, the radio frequency front-end circuit according to the present disclosure can reduce the number of antennas and improve the performance of the radio frequency front-end circuit. In addition to that, the radio frequency front-end circuit according to the present disclosure can reduce the number of radio frequency transmission lines, extractors, and diplexers, thus freeing up design space of the electronic device.

It is to be understood that both the foregoing general description and the following detailed description are by examples, and are intended to provide further explanation of the disclosure as claimed.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain the principles of the present disclosure. In the drawings,
Fig. 1 depicts a schematic diagram of a component layout of an electronic device according to one embodiment of the present disclosure;
Fig. 2A depicts a schematic diagram of an antenna that supports multiple bands according to one embodiment of the present disclosure;
Fig. 2B depicts a schematic diagram of a component layout of an electronic device according to another embodiment of the present disclosure;
Fig. 3 depicts a functional block diagram of an electronic device according to one embodiment of the present disclosure;
Fig. 4 depicts a schematic diagram of a radio frequency front-end circuit according to one embodiment of the present disclosure;
Fig. 5A depicts a schematic diagram of an extractor according to one embodiment of the present disclosure;
Fig. 5B depicts a schematic diagram of a pin layout of an extractor according to one embodiment of the present disclosure;
Fig. 6 depicts a schematic diagram of a radio frequency front-end circuit according to another embodiment of the present disclosure; and
Fig. 7 depicts a schematic diagram of a radio frequency front-end circuit according to still another embodiment of the present disclosure.

### DESCRIPTION OF THE EMBODIMENTS

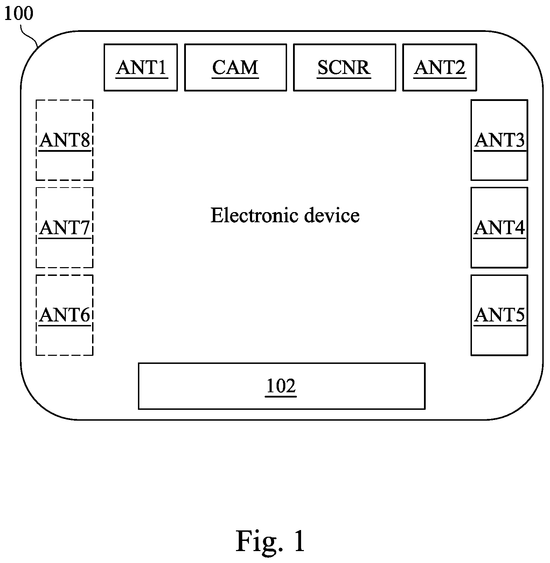

A description is provided with reference to Fig. 1. Fig. 1 depicts a schematic diagram of a component layout of an electronic device 100 according to one embodiment of the present disclosure. In some embodiments, the electronic device 100 is a handheld device. As shown in Fig. 1, the electronic device 100 includes antennas ANT1-ANT8, a camera CAM, a scanner SCNR, and an input/output port 102. With the development of wireless transmission, the electronic device 100 is equipped with an increasing number of antennas. For example, the antennas ANT1-ANT8 include 4 wireless wide area network antennas, 2 wireless local area network antennas, and 1 to 2 global navigation system antennas. That is, the electronic device 100 needs to be equipped with 7 or 8 antennas in total. However, under the circumstance that the number of antennas keeps increasing, the current design methods for multi-antenna communication systems (such as 7 to 8 antennas and a large number of radio frequency front-end components) are difficult to satisfy the limited space_of the electronic device 100.

In order to free up more space, the present disclosure provides a radio frequency front-end circuit applied to a single antenna supporting multiple bands. The multiple bands include a wireless wide area network band and a global navigation system band. By separating and combining signals of the above bands through the radio frequency front-end circuit of the present disclosure, the number of antennas and radio frequency front-end components required can be reduced.

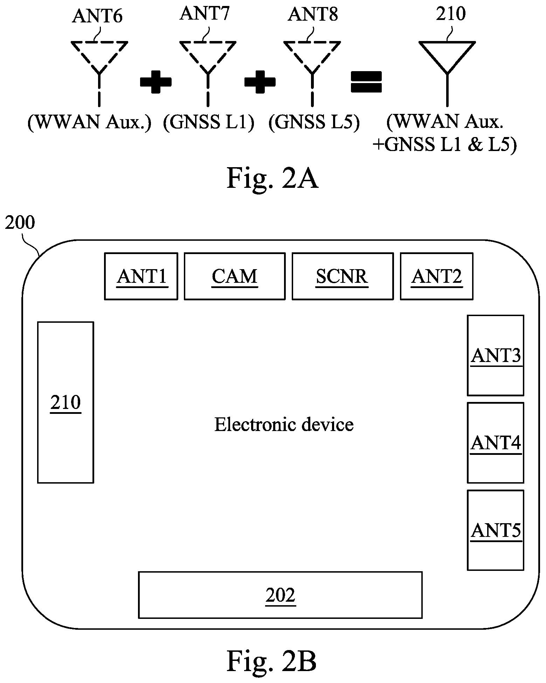

A description is provided with reference to Fig. 2A. Fig. 2A depicts a schematic diagram of an antenna 210 that supports multiple bands according to one embodiment of the present disclosure. As shown in Fig. 2A, the antenna ANT6 is a wireless wide area network auxiliary antenna, and the antennas ANT7-ANT8 are global navigation system L1, L5 antennas, respectively.

In some embodiments, the antenna 210 supports the wireless wide area network band and global navigation system L1 and L5 bands. In some embodiments, the antenna 210 is a wireless wide area network auxiliary antenna capable of supporting the global navigation system L1 and L5 bands.

A description is provided with reference to Fig. 2B. Fig. 2B depicts a schematic diagram of a component layout of an electronic device 200 according to another embodiment of the present disclosure. In some embodiments, the electronic device 200 is a handheld device. In other embodiments, the electronic device 200 may be a wearable device, but the present disclosure is not limited in this regard. In some embodiments, the electronic device 200 is a wireless communication device. In some embodiments, the electronic device 200 supports wireless wide area network communication, wireless local area network communication, and global navigation system technology. As shown in Fig. 2B, the electronic device 200 includes the antennas ANT1-ANT5, the camera CAM, the scanner SCNR, an input/output port 202, and the antenna 210.

In some embodiments, the antenna 210 of Fig. 2B corresponds to the antenna 210 of Fig. 2A. In some embodiments, the antennas ANT1-ANT5 include three wireless wide area network antennas and two wireless local area network antennas. The three wireless wide area network antennas include a wireless wide area network main antenna.

In some embodiments, the input/output port 202 is configured on a lower side of the electronic device 100 closer to a user, and the antenna 210, the antennas ANT3-ANT5, and the antennas ANT1-ANT2 are respectively configured on a left side, a right side, and an upper side, which is farther from the user, of the electronic device 100.

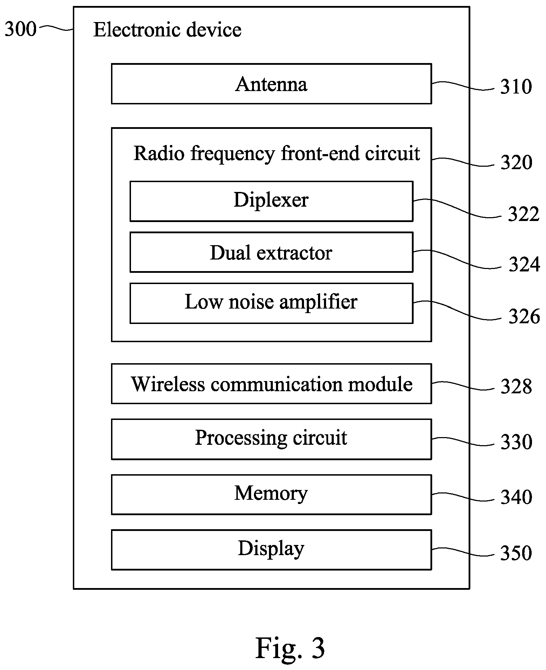

A description is provided with reference to Fig. 3. Fig. 3 depicts a functional block diagram of an electronic device 300 according to one embodiment of the present disclosure. In some embodiments, the electronic device 300 of Fig. 3 corresponds to the electronic device 200 of Fig. 2B. As shown in Fig. 3, the electronic device 300 includes an antenna 310, a radio frequency front-end circuit 320, and a wireless communication module 328. In some embodiments, the antenna 310 includes the antenna 210 of Fig. 2B. In some embodiments, the radio frequency front-end circuit 320 couples the antenna 310 to the wireless communication module 328 so as to separate/integrate a signal received by the antenna 310 and transmit it to the wireless communication module 328. In addition, the wireless communication module 328 includes a wireless wide area network module and a global navigation system module.

In some embodiments, the antenna 310 further includes the antennas ANT1-ANT5 in Fig. 2B. In some embodiments, the antennas ANT1-ANT5 include three wireless wide area network antennas and two wireless local area network antennas. The three wireless wide area network antennas include a wireless wide area network main antenna. In other embodiments, the antenna 310 of the electronic device 300 may include more or fewer antennas, and the present disclosure is not limited in this regard.

In some embodiments, the electronic device 300 further includes a processing circuit 330, a memory 340, and a display 350, and the processing circuit 330 is coupled to the wireless communication module 328, the memory 340, and the display 350 to process data.

In some embodiments, the radio frequency front-end circuit 320 includes a diplexer 322, a dual extractor 324, and a low noise amplifier 326. A detailed description of the radio frequency front-end circuit 320 may be referred to the following embodiments.

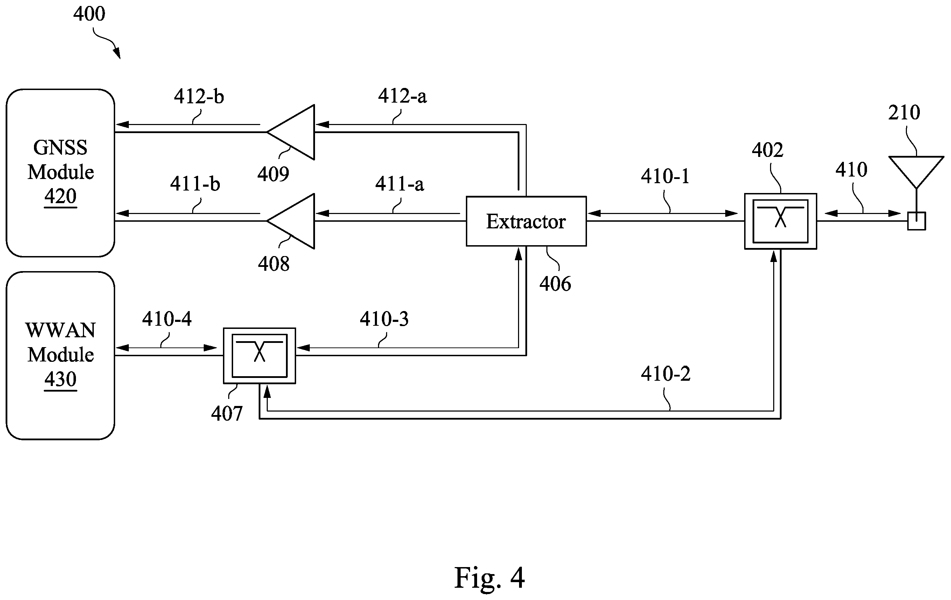

A description is provided with reference to Fig. 4. Fig. 4 depicts a schematic diagram of a radio frequency front-end circuit 400 according to one embodiment of the present disclosure. In some embodiments, the radio frequency front-end circuit 400 of Fig. 4 corresponds to the radio frequency front-end circuit 320 of Fig. 3. In some embodiments, a global navigation system module 420 and a wireless wide area network module 430 of Fig. 4 correspond to the wireless communication module 328 of Fig. 3. In some embodiments, the antenna 210 of Fig. 4 corresponds to the antenna 210 of Fig. 2A, and the antenna 210 is a wireless wide area network auxiliary antenna capable of supporting the global navigation system L1 and L5 bands. As shown in Fig. 4, the radio frequency front-end circuit 400 includes a diplexer 402, an extractor 406, low noise amplifiers 408-409, and a diplexer 407.

In some embodiments, the diplexer 402 is coupled to the antenna 210 for receiving a radio frequency signal 410, so as to separate the radio frequency signal 410 into a first signal 410-1 within low, mid and high bands of the wireless wide area network and a second signal 410-2 within an ultra-high band of the wireless wide area network.

In some embodiments, the extractor 406 is coupled to the diplexer 402, so as to separate the first signal 410-1 within the low mid and high bands of the wireless wide area network into two global navigation system signals 411-a and 412-a within two global navigation system bands and a third signal 410-3 within the mid and high bands of the wireless wide area network. In some embodiments, the extractor 406 is a dual extractor.

In some embodiments, the low noise amplifiers 408 and 409 are coupled to the extractor 406, and low noise amplifiers 408 and 409 are configured to respectively amplify the global navigation system signals 411-a and 412-a, so as to provide amplified signals 411-b and 412-b to two connection ports of the global navigation system module 420.

In some embodiments, the diplexer 407 is coupled to the diplexer 402 and the extractor 406, and is configured to combine the second signal 410-2 within the ultra-high band of the wireless wide area network and the third signal 410-3 within the mid and high bands of the wireless wide area network into a wireless wide area network signal 410-4, and provide the wireless wide area network signal 410-4 to a connection port of the wireless wide area network module 430. In some embodiments, the wireless wide area network module 430 supports the multi-input multi-output technology.

In some embodiment, the diplexer 407 is configured to separate the wireless wide area network signal 410-4 into the second signal 410-2 within the ultra-high band of the wireless wide area network and the third signal 410-3 in the mid and high bands of the wireless wide area network. Additionally, the extractor 406 takes the third signal 410-3 within the mid and high bands of the wireless wide area network as the first signal 410-1 and transmits it to the diplexer 402. The diplexer 402 combines the first signal 410-1 and the second signal 410-2 into the radio frequency signal 410 for transmission by the antenna 210.

In some embodiments, the two global navigation system bands may be the global navigation system L1 and L5 bands. In some embodiments, the global navigation system signal 411-a is a global navigation system L1 signal, and the global navigation system signal 412-a is a global navigation system L5 signal. In some embodiments, the global navigation system L1 band is approximately 1575.42 MHz, and the global navigation system L5 band is approximately 1176.45 MHz.

In some embodiments, the low, mid and high bands of the wireless wide area network is in a range of 698 MHz to 2690 MHz. The mid and high band of the wireless wide area network is in a range of 1710 MHz to 2690 MHz.

In some embodiments, the ultra-high band of the wireless wide area network is in a range of 3300MHz to 4200MHz. In some embodiments, the ultra-high band of the wireless wide area network is in a range of 4400 MHz to 5000 MHz. In some embodiments, the ultra-high band of the wireless wide area network is in a range of 5150 MHz to 5850 MHz. The present disclosure is not limited in this regard.

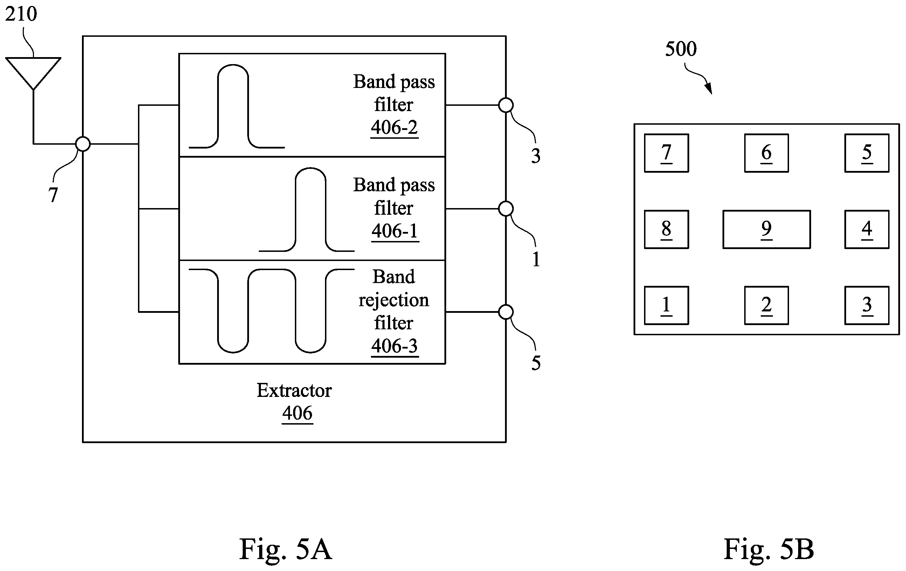

A description is provided with reference to Fig. 5A. Fig. 5A depicts a schematic diagram of the extractor 406 according to one embodiment of the present disclosure. As shown in Fig. 5A, the extractor 406 includes band pass filters 406-1 and 406-2 and a band rejection filter 406-3.

In some embodiments, a pin 7 of the extractor 406 connects the antenna 210 to first terminals (such as input/output terminals) of the band pass filters 406-1 and 406-2 and the band rejection filter 406-3, and second terminals (such as output/input terminals) of the band pass filters 406-1 and 406-2 and the band rejection filter 406-3 are connected to pins 1, 3, and 5 of the extractor 406, respectively.

In some embodiments, the band pass filter 406-1 is configured to extract a signal of the global navigation system L1 band. In some embodiments, the band pass filter 406-2 is configured to extract a signal of the global navigation system L5 band. In some embodiments, the band rejection filter 406-3 is configured to attenuate the signals within the global navigation system L1 and L5 bands included in a signal of the mid and high bands of the wireless wide area network, and allow the signal within the mid and high bands of the wireless wide area network except for the signals within the global navigation system L1 and L5 bands to pass. In some embodiments, the band rejection filter 406-3 is a dual-band rejection filter.

A description is provided with reference to Fig. 5B. Fig. 5B depicts a schematic diagram of a pin layout 500 of the extractor 406 according to one embodiment of the present disclosure. As shown in Fig. 5B, the extractor 406 includes the pins 1, 3, 5, 7 and pins 2, 4, 6, 8, 9. Functions of the pins 1-9 are shown in the following Table 1.

**Table 1**

| Pin | Function |
|---|---|
| 1 | GNSS L1 |
| 3 | GNSS L5 |
| 5 | Cellular Network |
| 7 | Antenna |
| 2-4-6-8-9 | Ground |

As shown in Table 1, the pin 1 of the extractor 406 is configured to output the signal of the global navigation system L1 band, and the pin 3 of the extractor 406 is configured to output the signal of the global navigation system L5 band. In some embodiments, a signal output from the pin 5 of the extractor 406 corresponds to the wireless wide area network band. In some embodiments, the pins 2, 4, 6, 8, 9 of the extractor 406 are grounded.

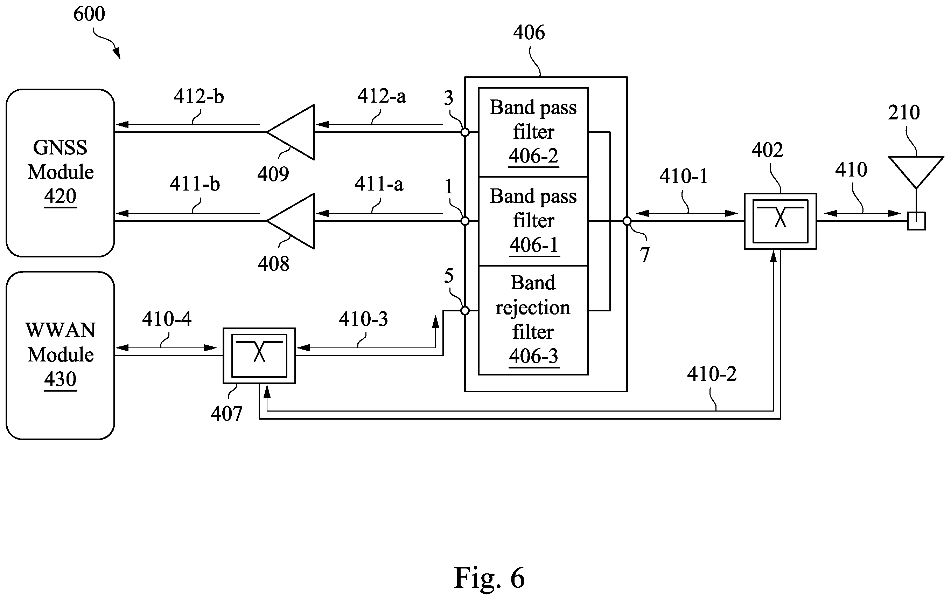

A description is provided with reference to Fig. 6. Fig. 6 depicts a schematic diagram of a radio frequency front-end circuit 600 according to another embodiment of the present disclosure. In some embodiments, the radio frequency front-end circuit 600 of Fig. 6 corresponds to the radio frequency front-end circuit 400 of Fig. 4. In some embodiments, the antenna 210 in Fig. 6 is a wireless wide area network auxiliary antenna capable of supporting the global navigation system L1 and L5 bands. As shown in Fig. 6, the radio frequency front-end circuit 600 includes the diplexer 402, the extractor 406, the low noise amplifiers 408-409, and the diplexer 407. In some embodiments, the extractor 406 includes the band pass filters 406-1 and 406-2 and the band rejection filter 406-3.

In some embodiments, the band pass filter 406-1 is coupled between the diplexer 402 and an input terminal of the low noise amplifier 408, and is configured to extract the global navigation system signal 411-a from the first signal 410-1 in the low, mid and high bands of the wireless wide area network, and provide the global navigation system signal 411-a to the low noise amplifier 408. In some embodiments, an output terminal of the low noise amplifier 408 is coupled to a first connection port of the global navigation system module 420 so as to send the amplified signal 411-b to the global navigation system module 420.

In some embodiments, the band pass filter 406-2 is coupled between the diplexer 402 and an input terminal of the low noise amplifier 409, and is configured to extract the global navigation system signal 412-a from the first signal 410-1 in the low, mid and high bands of the wireless wide area network, and provide the global navigation system signal 412-a to the low noise amplifier 409. In some embodiments, an output terminal of the low noise amplifier 409 is coupled to a second connection port of the global navigation system module 420 so as to send the amplified signal 412-b to the global navigation system module 420.

In some embodiments, the band rejection filter 406-3 is coupled between the diplexers 402 and 407, and is configured to allow the third signal 410-3 in the mid and high bands of the wireless wide area network included in the first signal 410-1 to pass. In some embodiments, the band rejection filter 406-3 is further configured to attenuate the signals of the global navigation system L1 and L5 bands included in the third signal 410-3, and allow the third signal 410-3 except for the signals in the global navigation system L1 and L5 bands to pass.

In some embodiments, circuit connection relationships and operation methods of the radio frequency front-end circuit 600 are similar to circuit connection relationships and operation methods of the radio frequency front-end circuit 400, and a description in this regard is not provided.

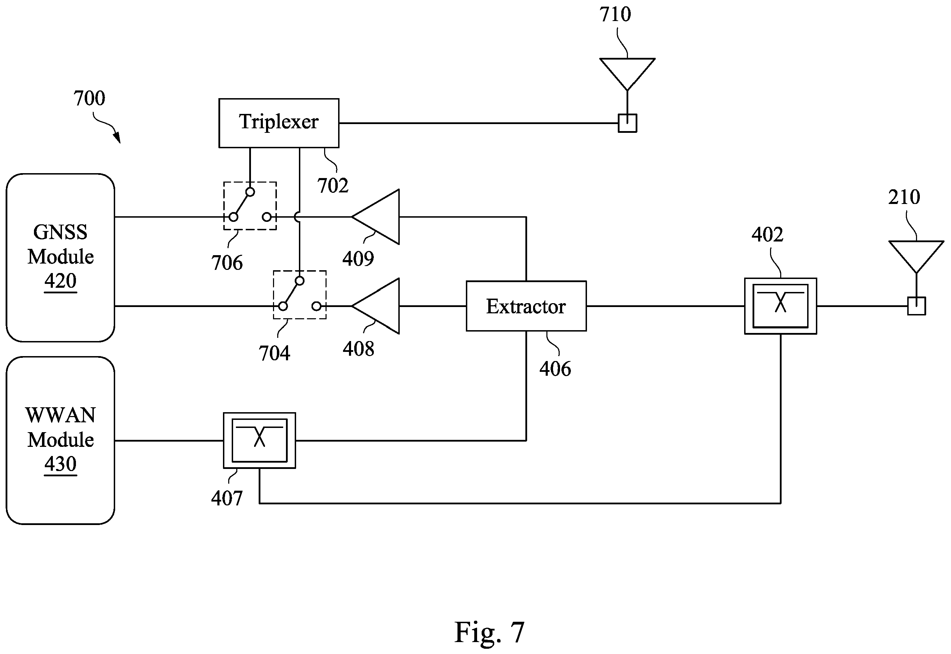

A description is provided with reference to Fig. 7. Fig. 7 depicts a schematic diagram of a radio frequency front-end circuit 700 according to still another embodiment of the present disclosure. In some embodiments, the radio frequency front-end circuit 700 of Fig. 7 corresponds to the radio frequency front-end circuit 320 of Fig. 3. As shown in Fig. 7, the radio frequency front-end circuit 700 includes the diplexer 402, the extractor 406, the low noise amplifiers 408-409, and the diplexer 407. As compared with the radio frequency front-end circuit 600 of Fig. 6, the radio frequency front-end circuit 700 of Fig. 7 further includes a triplexer 702 and single pole double throw switches 704 and 706.

In some embodiments, a common contact of the single pole double throw switch 704 is coupled to the first connection port of the global navigation system module 420. A first contact of the single pole double throw switch 704 is coupled to the triplexer 702, and a second contact of the single pole double throw switch 704 is coupled to the output terminal of the low noise amplifier 408.

In some embodiments, a common contact of the single pole double throw switch 706 is coupled to the second connection port of the global navigation system module 420. A first contact of the single pole double throw switch 706 is coupled to the triplexer 702, and a second contact of the single pole double throw switch 706 is coupled to the output terminal of the low noise amplifier 409.

In some embodiments, the triplexer 702 is coupled to an external antenna 710 that supports the two global navigation system L1 and L5 bands.

In some embodiments, if an electronic device is equipped with the external antenna 710 that supports the two global navigation system L1 and L5 bands, receiving paths of the signals of the global navigation system L1 and L5 bands can be switched through the triplexer 702 and the single pole double throw switches 704 and 706. Therefore, the radio frequency front-end circuit 700 has better adaptability.

In summary, based on the radio frequency front-end circuits 400, 600 and 700 according to the present disclosure, the number of antennas and radio frequency front-end components (such as radio frequency transmission lines, extractors, and diplexers) required by the electronic devices 200 and 300 can be reduced. As a result, the performance of radio frequency front-end circuits is improved to free up design space of the electronic devices.

## Claims

1. A radio frequency front-end circuit (600), comprising:
a first diplexer (402) coupled to an antenna (210) for receiving a radio frequency signal (410), the first diplexer (402) being configured to separate the radio frequency signal (410) into a first signal (410-1) in low, mid and high bands of a wireless wide area network and a second signal (410-2) in an ultra-high band of the wireless wide area network;
an extractor (406) coupled to the first diplexer (402) comprising:
two band pass filters (406-1, 406-2) configured to extract two global navigation system signals (411-a, 412-a) within two global navigation system bands from the first signal (410-1); and
a band rejection filter (406-3) configured to allow a third signal (410-3) within the mid and high bands of the wireless wide area network in the first signal (410-1) to pass; and
a second diplexer (407) coupled to the first diplexer (402) and the extractor (406), the second diplexer (407) being configured to combine the second signal (410-2) and the third signal (410-3) into a wireless wide area network signal (410-4).

2. The radio frequency front-end circuit (600) of claim 1, wherein the antenna (210) supports the two global navigation system bands and a wireless wide area network band.

3. The radio frequency front-end circuit (600) of claim 1, wherein the antenna (210) is a wireless wide area network auxiliary antenna.

4. The radio frequency front-end circuit (600) of claim 1, wherein the extractor (406) is a dual extractor.

5. The radio frequency front-end circuit (600) of claim 1, 2, 3 or 4, wherein the band rejection filter (406-3) is a dual-band rejection filter.

6. The radio frequency front-end circuit (600) of claim 5, wherein the band rejection filter (406-3) is coupled between the first diplexer (402) and the second diplexer (407).

7. The radio frequency front-end circuit (600) of claim 5, wherein the band rejection filter (406-3) is configured to attenuate the two global navigation system signals (411-a, 412-a) within the two global navigation system bands contained in the first signal (410-1), and allow the third signal (410-3) within the mid and high bands of the wireless wide area network in the first signal (410-1) to pass.

8. The radio frequency front-end circuit (600) of claim 1, 2, 3 or 4, wherein the two global navigation system bands are a global navigation system L1 band and a global navigation system L5 band.

9. The radio frequency front-end circuit (600) of claim 1, 2, 3 or 4, wherein the low, mid and high bands of the wireless wide area network comprises the two global navigation system bands and the mid and high bands of the wireless wide area network.

10. The radio frequency front-end circuit (600) of claim 1, 2, 3, 4 or 5, wherein the two band pass filters (406-1, 406-2) comprise:
a first band pass filter (406-1) configured to allow a first global navigation system signal (411-a) of the two global navigation system signals (411-a, 412-a) to pass; and
a second band pass filter (406-2) configured to allow a second global navigation system signal (412-a) of the two global navigation system signals (411-a, 412-a) to pass.

11. The radio frequency front-end circuit (600) of claim 10, further comprising:
a first low noise amplifier (408) coupled to an output terminal of the first band pass filter (406-1), the first low noise amplifier (408) being configured to amplify the first global navigation system signal (411-a) to provide a first amplified signal (411-b) to a first connection port of a global navigation system module (420); and
a second low noise amplifier (409) coupled to an output terminal of the second band pass filter (406-2), the second low noise amplifier (409) being configured to amplify the second global navigation system signal (412-a) to provide a second amplified signal (412-b) to a second connection port of a global navigation system module (420).

12. The radio frequency front-end circuit (600; 700) of claim 11, further comprising:
a triplexer (702) coupled to an external antenna (710) that supports the two global navigation system bands; and
a first single pole double throw switch (704), a common contact of the first single pole double throw switch (704) being coupled to the first connection port of the global navigation system module (420), a first contact of the first single pole double throw switch (704) being coupled to the triplexer, and a second contact of the first single pole double throw switch (704) being coupled to an output terminal of the first low noise amplifier (408).

13. The radio frequency front-end circuit (600; 700) of claim 11, further comprising:
a triplexer (702) coupled to an external antenna (710) that supports the two global navigation system bands; and
a second single pole double throw switch (706), a common contact of the second single pole double throw switch (706) being coupled to the second connection port of the global navigation system module (420), a first contact of the second single pole double throw switch (706) being coupled to the triplexer (702), and a second contact of the second single pole double throw switch (706) being coupled to an output terminal of the second low noise amplifier (409).

14. An electronic device (300) comprising:
an antenna (210) for receiving a radio frequency signal (410);
a radio frequency front-end circuit (600) coupled to the antenna (210), the radio frequency front-end circuit (600) comprising:
a first diplexer (402) coupled to the antenna (210), the first diplexer (402) being configured to separate the radio frequency signal (410) into a first signal (410-1) within low, mid and high bands of a wireless wide area network and a second signal (410-2) within an ultra-high band of the wireless wide area network;
an extractor (406) coupled to the first diplexer (402) comprising:
two band pass filters (406-1, 406-2) configured to extract two global navigation system signals (411-a, 412-a) within two global navigation system bands from the first signal (410-1); and
a band rejection filter (406-3) configured to allow a third signal (410-3) within the mid and high bands of the wireless wide area network in the first signal (410-1) to pass; and
a second diplexer (407) coupled to the first diplexer (402) and the extractor (406), the second diplexer (407) being configured to combine the second signal (410-2) and the third signal (410-3) into a wireless wide area network signal (410-4).

15. The electronic device (300) of claim 14, wherein the antenna (210) supports the two global navigation system bands and a wireless wide area network band.

## Patentansprüche

1. Radiofrequenz-Frontend-Schaltung (600), aufweisend:
einen ersten Diplexer (402), der mit einer Antenne (210) zum Empfangen eines Radiofrequenzsignals (410) gekoppelt ist, wobei der erste Diplexer (402) konfiguriert ist, um das Radiofrequenzsignal (410) in ein erstes Signal (410-1) in einem Nieder-, Mittel- und Hochband eines Drahtlos-Weitverkehrsnetzes und ein zweites Signal (410-2) in einem Ultrahochband des Drahtlos-Weitverkehrsnetzes aufzuteilen,
einen mit dem ersten Diplexer (402) gekoppelten Extraktor (406), der aufweist:
zwei Bandpassfilter (406-1, 406-2), die konfiguriert sind, um zwei Globales-Navigationssystem-Signale (411-a, 412-a) innerhalb von zwei Globales-Navigationssystem-Bändern aus dem ersten Signal (410-1) zu extrahieren, und
ein Bandsperrfilter (406-3), das konfiguriert ist, um ein drittes Signal (410-3) innerhalb des Mittel- und Hochbandes des Drahtlos-Weitverkehrsnetzes im ersten Signal (410-1) durchzulassen, und
einen zweiten Diplexer (407), der mit dem ersten Diplexer (402) und dem Extraktor (406) gekoppelt ist, wobei der zweite Diplexer (407) konfiguriert ist, um das zweite Signal (410-2) und das dritte Signal (410-3) zu einem Drahtlos-Weitverkehrsnetz-Signal (410-4) zu kombinieren.

2. Radiofrequenz-Frontend-Schaltung (600) gemäß Anspruch 1, wobei die Antenne (210) die beiden Globales-Navigationssystem-Bänder und ein Drahtlos-Weitverkehrsnetz-Band unterstützt.

3. Radiofrequenz-Frontend-Schaltung (600) gemäß Anspruch 1, wobei die Antenne (210) eine Drahtlos-Weitverkehrsnetz-Hilfsantenne ist.

4. Radiofrequenz-Frontend-Schaltung (600) gemäß Anspruch 1, wobei der Extraktor (406) ein Dual-Extraktor ist.

5. Radiofrequenz-Frontend-Schaltung (600) gemäß Anspruch 1, 2, 3 oder 4, wobei das Bandsperrfilter (406-3) ein Dualband-Sperrfilter ist.

6. Radiofrequenz-Frontend-Schaltung (600) gemäß Anspruch 5, wobei das Bandsperrfilter (406-3) zwischen dem ersten Diplexer (402) und dem zweiten Diplexer (407) gekoppelt ist.

7. Radiofrequenz-Frontend-Schaltung (600) gemäß Anspruch 5, wobei das Bandsperrfilter (406-3) konfiguriert ist, um die beiden Globales-Navigationssystem-Signale (411-a, 412-a) innerhalb der beiden im ersten Signal (410-1) enthaltenen Globales-Navigationssystem-Bänder zu dämpfen und das dritte Signal (410-3) innerhalb des Mittel- und Hochbandes des Drahtlos-Weitverkehrsnetzes im ersten Signal (410-1) durchzulassen.

8. Radiofrequenz-Frontend-Schaltung (600) gemäß Anspruch 1, 2, 3 oder 4, wobei die beiden Globales-Navigationssystem-Bänder ein Globales-Navigationssystem-L1-Band und ein Globales-Navigationssystem-L5-Band sind.

9. Radiofrequenz-Frontend-Schaltung (600) gemäß Anspruch 1, 2, 3 oder 4, wobei das Nieder-, Mittel- und Hochband des Drahtlos-Weitverkehrsnetzes die zwei Globales-Navigationssystem-Bänder und das Mittel- und Hochband des Drahtlos-Weitverkehrsnetzes aufweisen.

10. Radiofrequenz-Frontend-Schaltung (600) gemäß Anspruch 1, 2, 3, 4 oder 5, wobei die beiden Bandpassfilter (406-1, 406-2) aufweisen:
ein erstes Bandpassfilter (406-1), das konfiguriert ist, um ein erstes Globales-Navigationssystem-Signal (411-a) der beiden Globales-Navigationssystem-Signale (411-a, 412-a) durchzulassen, und
ein zweites Bandpassfilter (406-2), das konfiguriert ist, um ein zweites Globales-Navigationssystem-Signal (412-a) der beiden Globales-Navigationssystem-Signale (411-a, 412-a) durchzulassen.

11. Radiofrequenz-Frontend-Schaltung (600) gemäß Anspruch 10, ferner aufweisend:
einen ersten rauscharmen Verstärker (408), der mit einem Ausgangsanschluss des ersten Bandpassfilters (406-1) gekoppelt ist, wobei der erste rauscharme Verstärker (408) konfiguriert ist, um das erste Globales-Navigationssystem-Signal (411-a) zu verstärken, um ein erstes verstärktes Signal (411-b) an einen ersten Verbindungsanschluss eines Globales-Navigationssystem-Moduls (420) bereitzustellen, und
einen zweiten rauscharmen Verstärker (409), der mit einem Ausgangsanschluss des zweiten Bandpassfilters (406-2) gekoppelt ist, wobei der zweite rauscharme Verstärker (409) konfiguriert ist, um das zweite Globales-Navigationssystem-Signal (412-a) zu verstärken, um ein zweites verstärktes Signal (412-b) an einen zweiten Verbindungsanschluss eines Globales-Navigationssystem-Moduls (420) bereitzustellen.

12. Radiofrequenz-Frontend-Schaltung (600, 700) gemäß Anspruch 11, ferner aufweisend:
einen Triplexer (702), der mit einer externen Antenne (710) gekoppelt ist, die die beiden Globales-Navigationssystem-Bänder unterstützt, und
einen ersten Einpol-Wechselschalter (704), wobei ein gemeinsamer Kontakt des ersten Einpol-Wechselschalters (704) mit dem ersten Verbindungsanschluss des Globales-Navigationssystem-Moduls (420) gekoppelt ist, ein erster Kontakt des ersten Einpol-Wechselschalters (704) mit dem Triplexer gekoppelt ist und ein zweiter Kontakt des ersten Einpol-Wechselschalters (704) mit einem Ausgangsanschluss des ersten rauscharmen Verstärkers (408) gekoppelt ist.

13. Radiofrequenz-Frontend-Schaltung (600, 700) gemäß Anspruch 11, ferner aufweisend:
einen Triplexer (702), der mit einer externen Antenne (710) gekoppelt ist, die die beiden Globales-Navigationssystem-Bänder unterstützt, und
einen zweiten Einpol-Wechselschalter (706), wobei ein gemeinsamer Kontakt des zweiten Einpol-Wechselschalters (706) mit dem zweiten Verbindungsanschluss des Globales-Navigationssystem-Moduls (420) gekoppelt ist, ein erster Kontakt des zweiten Einpol-Wechselschalters (706) mit dem Triplexer (702) gekoppelt ist, und ein zweiter Kontakt des zweiten Einpol-Wechselschalters (706) mit einem Ausgangsanschluss des zweiten rauscharmen Verstärkers (409) gekoppelt ist.

14. Elektronische Vorrichtung (300), aufweisend:
eine Antenne (210) zum Empfangen eines Radiofrequenzsignals (410),
eine mit der Antenne (210) gekoppelte Radiofrequenz-Frontend-Schaltung (600), wobei die Radiofrequenz-Frontend-Schaltung (600) aufweist:
einen ersten Diplexer (402), der mit der Antenne (210) gekoppelt ist, wobei der erste Diplexer (402) konfiguriert ist, um das Radiofrequenzsignal (410) in ein erstes Signal (410-1) innerhalb eines Nieder-, Mittel- und Hochbandes eines Drahtlos-Weitverkehrsnetzes und ein zweites Signal (410-2) innerhalb eines Ultrahochbands des Drahtlos-Weitverkehrsnetzes aufzuteilen,
einen mit dem ersten Diplexer (402) gekoppelten Extraktor (406), der aufweist:
zwei Bandpassfilter (406-1, 406-2), die konfiguriert sind, um zwei Globales-Navigationssystem-Signale (411-a, 412-a) innerhalb von zwei Globales-Navigationssystem-Bändern aus dem ersten Signal (410-1) extrahieren, und
ein Bandsperrfilter (406-3), das konfiguriert ist, um ein drittes Signal (410-3) innerhalb des Mittel- und Hochbandes des Drahtlos-Weitverkehrsnetzes im ersten Signal (410-1) durchzulassen, und
einen zweiten Diplexer (407), der mit dem ersten Diplexer (402) und dem Extraktor (406) gekoppelt ist, wobei der zweite Diplexer (407) konfiguriert ist, um das zweite Signal (410-2) und das dritte Signal (410-3) zu einem Drahtlos-Weitverkehrsnetz-Signal (410-4) zu kombinieren.

15. Elektronische Vorrichtung (300) gemäß Anspruch 14, wobei die Antenne (210) die beiden Globales-Navigationssystem-Bänder und ein Drahtlos-Weitverkehrsnetz-Band unterstützt.

## Revendications

1. Circuit d'étage d'entrée radiofréquence (600), comprenant :
un premier diplexeur (402) couplé à une antenne (210) pour recevoir un signal radiofréquence (410), le premier diplexeur (402) étant configuré pour séparer le signal radiofréquence (410) en un premier signal (410-1) dans les bandes basse, moyenne et haute d'un réseau étendu sans fil et en un deuxième signal (410-2) dans une bande ultra-haute dudit réseau étendu sans fil ;
un extracteur (406) couplé au premier diplexeur (402), comprenant :
deux filtres passe-bande (406-1, 406-2) configurés pour extraire du premier signal (410-1) deux signaux de système de navigation global (411-a, 412-a) dans deux bandes de système de navigation global ; et
un filtre de réjection de bande (406-3) configuré pour laisser passer un troisième signal (410-3) dans les bandes moyenne et haute du réseau étendu sans fil au sein du premier signal (410-1) ; et
un deuxième diplexeur (407) couplé au premier diplexeur (402) et à l'extracteur (406), le deuxième diplexeur (407) étant configuré pour combiner le deuxième signal (410-2) et le troisième signal (410-3) en un signal de réseau étendu sans fil (410-4).

2. Circuit d'étage d'entrée radiofréquence (600) selon la revendication 1, dans lequel l'antenne (210) supporte les deux bandes de système de navigation global et une bande de réseau étendu sans fil.

3. Circuit d'étage d'entrée radiofréquence (600) selon la revendication 1, dans lequel l'antenne (210) est une antenne auxiliaire de réseau étendu sans fil.

4. Circuit d'étage d'entrée radiofréquence (600) selon la revendication 1, dans lequel l'extracteur (406) est un extracteur double.

5. Circuit d'étage d'entrée radiofréquence (600) selon la revendication 1, 2, 3 ou 4, dans lequel le filtre de réjection de bande (406-3) est un filtre de réjection double bande.

6. Circuit d'étage d'entrée radiofréquence (600) selon la revendication 5, dans lequel le filtre de réjection de bande (406-3) est couplé entre le premier diplexeur (402) et le deuxième diplexeur (407).

7. Circuit d'étage d'entrée radiofréquence (600) selon la revendication 5, dans lequel le filtre de réjection de bande (406-3) est configuré pour atténuer les deux signaux de système de navigation global (411-a, 412-a) dans les deux bandes de système de navigation global contenues dans le premier signal (410-1), et laisser passer le troisième signal (410-3) se situant dans les bandes moyenne et haute du réseau étendu sans fil dans le premier signal (410-1).

8. Circuit d'étage d'entrée radiofréquence (600) selon la revendication 1, 2, 3 ou 4, dans lequel les deux bandes de système de navigation global sont une bande L1 de système de navigation global et une bande L5 de système de navigation global.

9. Circuit d'étage d'entrée radiofréquence (600) selon la revendication 1, 2, 3 ou 4, dans lequel les bandes basse, moyenne et haute du réseau étendu sans fil comprennent les deux bandes de système de navigation global ainsi que les bandes moyenne et haute du réseau étendu sans fil.

10. Circuit d'étage d'entrée radiofréquence (600) selon la revendication 1, 2, 3, 4 ou 5, dans lequel les deux filtres passe-bande (406-1, 406-2) comprennent :
un premier filtre passe-bande (406-1) configuré pour laisser passer un premier signal de système de navigation global (411-a) parmi les deux signaux de système de navigation global (411-a, 412-a) ; et
un deuxième filtre passe-bande (406-2) configuré pour laisser passer un deuxième signal de système de navigation global (412-a) parmi les deux signaux de système de navigation global (411-a, 412-a).

11. Circuit d'étage d'entrée radiofréquence (600) selon la revendication 10, comprenant en outre :
un premier amplificateur à faible bruit (408) couplé à une borne de sortie du premier filtre passe-bande (406-1), le premier amplificateur à faible bruit (408) étant configuré pour amplifier le premier signal de système de navigation global (411-a) afin de fournir un premier signal amplifié (411-b) à un premier port de connexion d'un module de système de navigation global (420) ; et
un deuxième amplificateur à faible bruit (409) couplé à une borne de sortie du deuxième filtre passe-bande (406-2), le deuxième amplificateur à faible bruit (409) étant configuré pour amplifier le deuxième signal de système de navigation global (412-a) afin de fournir un deuxième signal amplifié (412-b) à un deuxième port de connexion d'un module de système de navigation global (420).

12. Circuit d'étage d'entrée radiofréquence (600 ; 700) selon la revendication 11, comprenant en outre :
un triplexeur (702) couplé à une antenne externe (710) qui supporte les deux bandes de système de navigation global ; et
un premier commutateur unipolaire à deux positions (704), un contact commun du premier commutateur unipolaire à deux positions (704) étant couplé au premier port de connexion du module de système de navigation global (420), un premier contact du premier commutateur unipolaire à deux positions (704) étant couplé au triplexeur, et un deuxième contact du premier commutateur unipolaire à deux positions (704) étant couplé à une borne de sortie du premier amplificateur à faible bruit (408).

13. Circuit d'étage d'entrée radiofréquence (600 ; 700) selon la revendication 11, comprenant en outre :
un triplexeur (702) couplé à une antenne externe (710) qui supporte les deux bandes de système de navigation global ; et
un deuxième commutateur unipolaire à deux positions (706), un contact commun du deuxième commutateur unipolaire à deux positions (706) étant couplé au deuxième port de connexion du module de système de navigation global (420), un premier contact du deuxième commutateur unipolaire à deux positions (706) étant couplé au triplexeur (702), et un deuxième contact du deuxième commutateur unipolaire à deux positions (706) étant couplé à une borne de sortie du deuxième amplificateur à faible bruit (409).

14. Dispositif électronique (300), comprenant :
une antenne (210) pour recevoir un signal radiofréquence (410) ;
un circuit d'étage d'entrée radiofréquence (600) couplé à l'antenne (210), le circuit d'étage d'entrée radiofréquence (600) comprenant :
un premier diplexeur (402) couplé à l'antenne (210), le premier diplexeur (402) étant configuré pour séparer le signal radiofréquence (410) en un premier signal (410-1) dans les bandes basse, moyenne et haute d'un réseau étendu sans fil et en un deuxième signal (410-2) dans une bande ultra-haute dudit réseau étendu sans fil ;
un extracteur (406) couplé au premier diplexeur (402), comprenant :
deux filtres passe-bande (406-1, 406-2) configurés pour extraire du premier signal (410-1) deux signaux de système de navigation global (411-a, 412-a) dans deux bandes de système de navigation global ; et
un filtre de réjection de bande (406-3) configuré pour laisser passer un troisième signal (410-3) dans les bandes moyenne et haute du réseau étendu sans fil, dans le premier signal (410-1) ; et
un deuxième diplexeur (407) couplé au premier diplexeur (402) et à l'extracteur (406), le deuxième diplexeur (407) étant configuré pour combiner le deuxième signal (410-2) et le troisième signal (410-3) en un signal de réseau étendu sans fil (410-4).

15. Dispositif électronique (300) selon la revendication 14, dans lequel l'antenne (210) supporte les deux bandes de système de navigation global et une bande de réseau étendu sans fil.
